Europäisches Patentamt

European Patent Office

Office européen des brevets

(19)

(11) EP 0 654 140 B1

(12) **EUROPÄISCHE PATENTSCHRIFT**

(45) Veröffentlichungstag und Bekanntmachung des Hinweises auf die Patenterteilung:
**17.04.1996 Patentblatt 1996/16**

(21) Anmeldenummer: **93917532.9**

(22) Anmeldetag: **06.08.1993**

(51) Int Cl.6: **G01D 5/20**, G01D 5/22

(86) Internationale Anmeldenummer:
**PCT/DE93/00703**

(87) Internationale Veröffentlichungsnummer:
**WO 94/03778 (17.02.1994 Gazette 1994/05)**

(54) **BERÜHRUNGSLOS ARBEITENDES WEGMESSSYSTEM UND VERFAHREN ZUR BERÜHRUNGSLOSEN WEGMESSUNG**

NON-CONTACT DISTANCE-MEASURING SYSTEM AND METHOD OF NON-CONTACT DISTANCE MEASURING

SYSTEME DE MESURE DE DEPLACEMENT FONCTIONNANT SANS CONTACT ET PROCEDE DE MESURE DE DEPLACEMENT SANS CONTACT

(84) Benannte Vertragsstaaten:
**DE FR GB IT**

(30) Priorität: **06.08.1992 DE 4225968**

(43) Veröffentlichungstag der Anmeldung:
**24.05.1995 Patentblatt 1995/21**

(73) Patentinhaber: **Micro-Epsilon Messtechnik GmbH & Co. KG**
**D-94496 Ortenburg (DE)**

(72) Erfinder: **MEDNIKOV, Felix**
**Samara, 443096 (RU)**

(74) Vertreter: **Naumann, Ulrich, Dr.-Ing.**
**Patentanwälte,**
**Ullrich & Naumann,**
**Gaisbergstrasse 3**
**D-69115 Heidelberg (DE)**

(56) Entgegenhaltungen:
DE-A- 1 147 874          GB-A- 2 053 487
US-A- 4 140 998

**Beschreibung**

Die Erfindung betrifft ein berührungslos arbeitendes Wegmeßsystem mit einem mit Wechselstrom beaufschlagbaren, eine Meßspule aufweisenden Sensor, einer mit dem Sensor verbundenen Versorgungs-/Auswerteelektronik und einem dem Sensor zugeordneten, elektrisch und/oder magnetisch leitenden Meßobjekt, wobei die Meßspule in einem vorzugsweise zylindrischen Spulengehäuse gekapselt ist und wobei das Meßobjekt das Spulengehäuse zumindest teilweise umgibt und in dessen Längsrichtung bewegbar ist. Des weiteren betrifft die vorliegende Erfindung ein Verfahren zur berührungslosen Wegmessung durch ein entsprechendes Wegmeßsystem.

Berührungslos arbeitende Wegmeßsysteme sind seit Jahren aus der Praxis in unterschiedlichsten Ausführungsformen bekannt. Sie lassen sich nach ihrer prinzipiellen Funktionsweise einerseits in Wegmeßsysteme auf Wirbelstrombasis, induktive und kapazitive Wegmeßsysteme, andererseits in optische oder akustische Wegmeßsysteme gliedern.

Die vorliegende Erfindung bezieht sich auf berührungslose Wegmeßsysteme mit einem mindestens eine Spule aufweisenden Sensor, also auf Wegmeßsysteme, die entweder auf Wirbelstrombasis oder induktiv arbeiten.

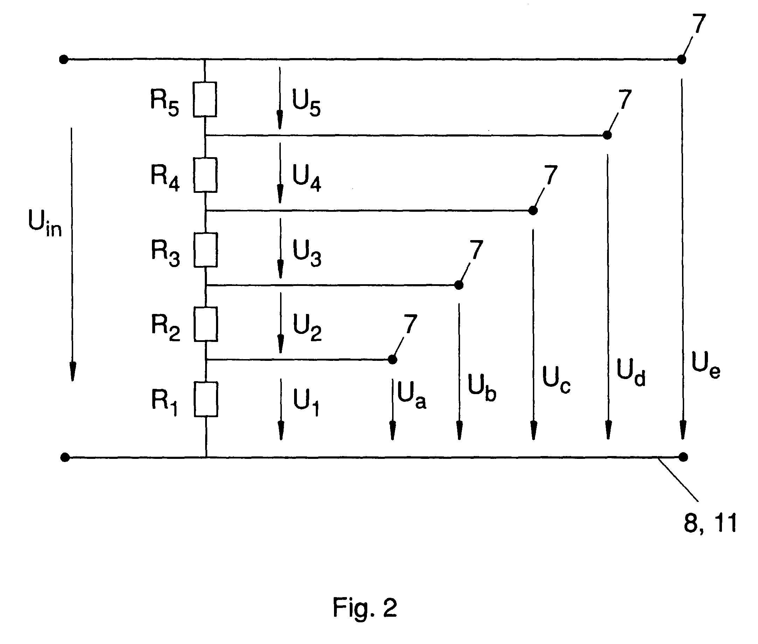

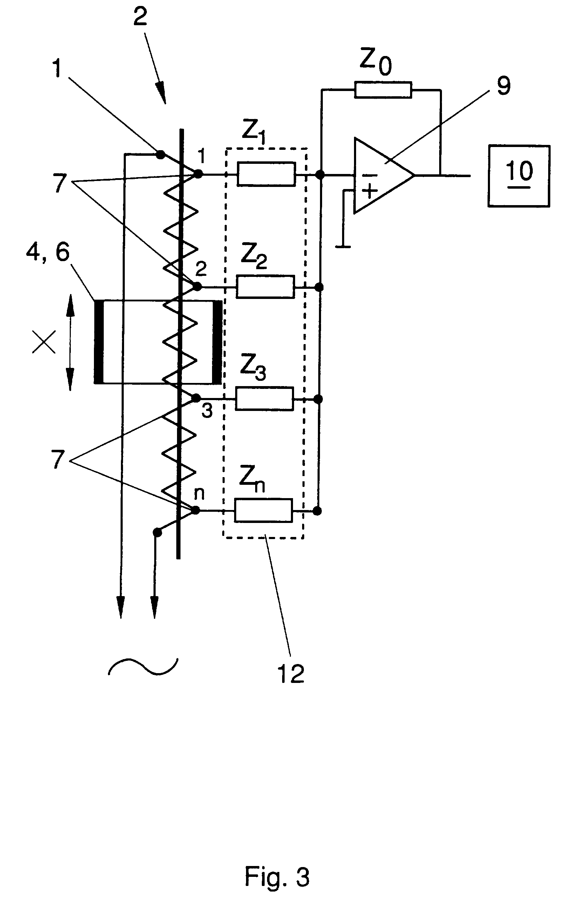

Für sich ist bereits aus der DE-A-3 801 828 ein Verschiebungsfühler bekannt, bei dem ein Dauermagnet an einem lebenden Körper angebracht und als Maß für die Bewegung oder Schwingung des lebenden Körpers die Änderung des Flusses des Dauermagneten gemessen wird. Dieser bekannte Verschiebungsfühler weist gemäß der Darstellung in Fig. 2 ein Gehäuse und eine in dem Gehäuse eingesetzte nichtmagnetische leitende Abschirmkapsel auf. Gemäß der Darstellung in Fig. 3 handelt es sich bei der Abschirmkapsel um einen dielektrischen thermoplastischen Kunststoff. Desweiteren sind innerhalb des Gehäuses Induktionsspulen vorgesehen. Die Abschirmkapsel dient in erster Linie dazu, daß eine Verarbeitungsschaltung durch elektromagnetische bzw. elektrische Felder des Verschiebungsfühlers nicht gestört bzw. beeinflußt wird.

Weiter ist aus der DE-B-1 900 894 - für sich - ein Verfahren zur Herstellung eines induktiven Meßumformers zur Abstandsmessung bekannt. Dabei offenbart die in Rede stehende Druckschrift auch Sensoren, wobei diese Sensoren einerseits von einer Metallhülse umgeben sind, andererseits auf ihrer Meßseite durch ein Epoxy-Harz geschützt sind.

Des weiteren sind aus der Praxis bereits sog. Wirbelstrom-Langwegsensoren bekannt, die bspw. in Hydraulik- und Pneumatikzylindern zur Weg- und Positionsmessung von Kolben oder Ventilen eingesetzt werden. Des weiteren erfolgt durch Langwegsensoren der in Rede stehenden Art eine Wegmessung an Pressen, Stanzen, Walzgerüsten, etc. In Hydraulik- und Pneumatikzylindern sind die Sensoren drucktest gekapselt und die Gehäuse aus rostfreiem Stahl gefertigt. Das dort angewandte Wirbelstrommeßprinzip arbeitet berührungsfrei. Die Sensoren unterliegen damit keinem mechanischen Verschleiß. Als Meßobjekt dient ein Aluminiumrohr, das konzentrisch und berührungsfrei über einem Stab bewegt wird. Im Inneren des Stabes ist eine Spule geschützt gegen Umgebungseinflüsse angeordnet. Durch Induktion von Wirbelströmen im Aluminiumrohr wird der Spule Energie entzogen und sie damit verstimmt.

Eine integrierte miniaturisierte Elektronik wandelt die Rohrposition in ein lineares elektrisches Ausgangssignal von in der Regel zwischen 4 und 20 mA um. Zur Speisung des Sensors ist eine Gleichspannung zwischen 15 und 30 Volt vorgesehen. Die aus der Praxis bekannten Langwegsensoren sind jedoch insoweit problematisch, als das als Meßobjekte dienende Aluminiumrohr insgesamt über den die Spule aufnehmenden Stab geschoben wird. Will man die gesamte Spulenlänge als Messlänge ausnutzen, so muß das Aluminiumrohr nahezu vollständig über den Stab weggeschoben werden, so daß sich eine nahezu aus der Länge des Stabes und des Aluminiumrohres ergebende Baulänge des Langwegsensors bzw. des in Rede stehenden Wegmeßsystems ergibt.

Hinzu kommt eine Problematik dahingehend, daß bei den in Rede stehenden Langwegsensoren die Ausgangsimpedanz der Meßspule stets von der Position des Meßobjektes bzw. des als Meßobjekt dienenden Aluminiumrohres abhängig ist. Folglich hat hier eine aufwendige Kompensation durch eine entsprechende Elektronik zu erfolgen, was wiederum konstruktiv aufwendig ist und daher enorme Kosten verursacht.

Der Erfindung liegt daher die Aufgabe zugrunde, ein berührungslos arbeitendes Wegmeßsystem anzugeben, welches bei geringer Baulänge und einfacher Konstruktion eine Meßspule aufweist, deren Ausgangimpedanz unabhängig von der Position des Meßobjektes ist. Des weiteren soll ein entsprechendes Verfahren zur berühungslosen Wegmessung angegeben werden.

Das erfindungsgemäße, berührungslos arbeitende Wegmeßsystem löst die zuvor aufgezeigte Aufgabe durch die Merkmale der nebengeordneten Patentansprüche 1 und 2. Danach ist das erfindungsgemäße Wegmeßsystem derart ausgebildet, daß das Meßobjekt als das Spulengehäuse mit Abstand umgreifender Ring ausgeführt ist. Des weiteren weist die Meßspule mindestens zwei Spannungsabgriffe auf, so daß entsprechend der Anzahl der Spannungsabgriffe der Reihe nach Spannungswerte jeweils zwischen den einzelnen Spannungsabgriffen und einem Referenzpotential abgreifbar sind und daß die Versorgungs-/Auswerteelektronik ein elektronisches Bauteil zum Addieren der abgegriffenen Spannungswerte zu einer mit der Position des Meßobjektes korrelierenden Gesamtspannung umfaßt.

Alternativ zu der voranstehend beschriebenen Ausführungsform kann das erfindungsgemäße Wegmeßsystem auch derart ausgebildet sein, daß entsprechend der Anzahl der Spannungsabgriffe der Reihe nach Einzelspannungen zwischen den Spannungsabgriffen abgreifbar sind und daß die Versorgungs-/Auswerteelektronik ein elektronisches Bauteil zum Addieren der abgegriffenen Einzelspannungen zu aufsteigenden Spannungswerten sowie ein weiteres elektronisches Bauteil zum abermaligen Addieren der Spannungswerte zu einer mit der Position des Meßobjektes korrelierenden Gesamtspannung umfaßt.

Erfindungsgemäß ist zunächst erkannt worden, daß sich die Baulänge des berührungslos arbeitenden Wegmeßsystems insbesondere im Hinblick auf eine volle Ausnutzung der Meßlänge dadurch erheblich verringern läßt, daß das Meßobjekt als ein das Spulengehäuse mit Abstand umgreifender Ring ausgebildet ist. Dadurch weist das Meßobjekt eine nur geringe Baulänge auf, wird somit über das die Meßspule enthaltende Spulengehäuse nicht hinausgeschoben. Des weiteren läßt sich in erfindungsgemäßer Weise der Aufenthaltsort des als Meßobjekt dienenden Ringes dadurch eindeutig ermitteln, daß die Spule mindestens zwei, vorzugsweise mehrere, Spannungsabgriffe aufweist, so daß entsprechend der Anzahl der Spannungsabgriffe der Reihe nach Spannungswerte jeweils zwischen den einzelnen Spannungsabgriffen und einem Referenzpotential abgreifbar sind. Die Versorgungs- bzw. Auswerteelektronik weist des weiteren ein elektronisches Bauteil zum Addieren der abgegriffenen Spannungswerte zu einer mit der Position des Meßobjekts korrelierenden Gesamtspannung auf. Alternativ dazu könnten entsprechend der Anzahl der Spannungsabgriffe der Reihe nach Einzelspannungen zwischen den Spannungsabgriffen abgreifbar sein. Die Versorgungs- bzw. Auswerteelektronik müßte dann ein elektronisches Bauteil zum Addieren der abgegriffenen Einzelspannungen zu aufsteigenden Spannungswerten aufweisen. Des weiteren wäre ein elektronisches Bauteil zum abermaligen Addieren der aus Einzelspannungen bereits aufaddierten Spannungswerte zu einer mit der Position des Meßobjekts korrelierenden Gesamtspannung vorgesehen.

Das erfindungsgemäße Wegmeßsystem ist entsprechend der voranstehend erläuterten alternativen Ausgestaltungen so ausgelegt, daß die Impedanz der Meßspule im Meßbereich nicht von der Position des Bildschirms abhängt. Folglich bleibt der durch die Meßspule fließende Strom für jede Position des als Meßobjekt dienenden Ringes unverändert. Das Signal am Ausgang des Bauteils zum Addieren der Spannungswerte ist entsprechend linear abhängig von der Position bzw. Koordinate des über das Spulengehäuse hinweg bewegbaren Ringes.

Im Hinblick auf die Addition der zwischen den Spannungsabgriffen abgreifbaren Einzelspannungen ist es von Vorteil, wenn den einzelnen Spannungsabgriffen ein Differenzverstärker für die abgegriffenen Einzelspannungen nachgeschaltet ist. Der Ausgang dieses Differenzverstärkers könnte mit dem weiteren elektronischen Bauteil zum abermaligen Addieren der Spannungswerte zu einer mit der Position des Meßobjekts korrelierenden Gesamtspannung verbunden sein bzw. dieses elektronische Bauteil speisen.

Das elektronische Bauteil zum Addieren der Spannungswerte könnte in besonders vorteilhafter Weise als summierender Verstärker ausgeführt sein. Dieser summierende Verstärker könnten wiederum einen invertierenden Eingang aufweisen.

Im Hinblick auf ein sicheres Detektieren des als Objekt dienenden Ringes ist es von weiterem Vorteil, wenn die Spannungsabgriffe bzw. die zwischen den Spannungsabgriffen liegenden Spulenabschnitte so gewählt sind, daß Einzelspannungen bei Abwesenheit des Ringes zumindest weitgehend identisch sind. Folglich läßt sich die Position des Ringes dadurch ermitteln, daß genau zwischen denjenigen Spannungsabgriffen, zwischen denen der Ring angeordnet ist, eine andere Spannung abgreifbar ist.

Diese Spannung geht entsprechend Ihrer Position und aufgrund der Addition zu einer Gesamtspannung in die additiv gebildete Gesamtspannung ein, so daß eine Abweichung der Gesamtspannung entsprechend der Häufigkeit der veränderten Einzelspannung in der Gesamtspannung auftritt.

In weiter vorteilhafter Weise sind zwischen die einzelnen Spannungsabgriffe und einem gemeinsamen Meßwertabgriff Widerstände geschaltet, die auf der dem jeweiligen Spannungsabgriff abgewandten Seite zum Meßabgriff hin miteinander gekoppelt sind. Folglich findet hier bereits eine Verknüpfung der Einzelspannungen durch den gewählten Spannungsabgriff statt.

Im Hinblick auf eine fehlerfreie Ermittlung der Position des Ringes ist es von weiterem Vorteil, wenn die Widerstände einen zumindest weitgehenden identischen Nennwert aufweisen. Dieser Nenn- bzw. Widerstandswert liegt in weiter vorteilhafter Weise um etwa zwei Ordnungen höher als der Ausgangswiderstand der Spule. Sowohl die Widerstände als auch die mit Spannungsabgriffen versehene Meßspule ist innerhalb des Spulengehäuses angeordnet, wodurch sich abermals eine nur geringe Baugröße des Wegmeßsystems bzw. Sensors ergibt.

Im Hinblick auf eine eindeutige Ermittlung der Position des als Meßobjekt dienenden Ringes könnte dieser eine maximal dem Abstand zwischen zwei benachbarten Spannungsabgriffen entsprechende Breite aufweisen, so daß der Ring zwischen zwei Spannungsabgriffen stets eindeutig lokalisierbar ist.

Im Hinblick auf die Ermittlung einer Spannungsänderung zwischen zwei Spannungsabgriffen läßt sich die Meßspule über vorzugsweise zwei Widerstände an eine Brückenschaltung anschließen, so daß bei Veränderung eines abgegriffenen Spannungswertes kein Abgleich der Brücke mehr stattfindet.

Zur Verringerung eines Temperaturfehlers lassen sich verschiedene Maßnahmen treffen. So könnte die Meßspule von einer Wechselspannungsquelle symmetrisch gespeist werden, wobei eine zusätzliche Speisung durch eine Gleichspannungsquelle bei nachfolgender Trennung der Gleich- und Wechselspannungskomponenten der Ausgangsspannung nach deren Addition erfolgt. Nach der Demodulation der Wechselspannungskomponente, die zur Positionsänderung des Ringes proportional ist, wird die Gleichspannungskomponente mit entsprechendem Übertragungsfaktor subtrahiert, wobei dieser Übertragungsfaktor zur Eichung selektiert wird. Zur Kompensation eines Temperaturfehlers könnte der Ring auch eine in seinem Inneren angeordnete, mit einer Wechselspannung beaufschlagbare Kompensationsspule aufweisen, deren Beaufschlagung entsprechend einem auftretenden Temperaturgradienten verändert wird.

Hinsichtlich der grundsätzlichen Funktionsweise des erfindungsgemäßen Wegmeßsystems könnte dieses grundsätzlich induktiv oder nach dem Wirbelstromprinzip arbeiten. Die Meßspule könnte in ganz besonders vorteilhafter Weise einen ferromagnetischen Spulenkern aufweisen. Der als Meßobjekt dienende Ring könnte aus einem Werkstoff mit geringem spezifischem elektrischem Widerstand, bspw. aus Aluminium, hergestellt sein.

Die der vorliegenden Erfindung zugrundeliegende Aufgabe wird hinsichtlich des erfindungsgemäßen Verfahrens wahlweise durch die Merkmale der Patentansprüche 21 oder 22 gelöst. Danach werden entsprechend der Anzahl der Spannungsabgriffe der Reihe nach Spannungswerte jeweils zwischen den einzelnen Spannungsabgriffen und einem Referenzpotential abgegriffen und die abgegriffenen Spannungswerte werden zu einer mit der Position des Meßobjekts korrelierenden Gesamtspannung addiert. Alternativ dazu könnten entsprechend der Anzahl der Spannungsabgriffe der Reihe nach Einzelspannungen zwischen den Spannungsabgriffen abgegriffen werden, so daß die abgegriffenen Einzelspannungen zu aufsteigenden Spannungswerten addiert und abermals zu einer mit der Position des Meßobjektes korrelierenden Gesamtspannung addiert werden.

Wesentlich ist jedenfalls, daß die Positon des als Meßobjekt dienenden Ringes eindeutig dadurch bestimmbar ist, daß sich die Einzelspannung zwischen zwei Spannungsabgriffen dann verändert, wenn der Ring sich zwischen den Spannungsabgriffen befindet. Aufgrund der vorzunehmenden Addition sämtlicher Einzelspannungen in aufsteigender Reihe zu Spannungswerten, die von einer Seite der Meßspule her wiederum aufaddiert werden, läßt sich entsprechend der Häufigkeit der veränderten Einzelspannung in der Gesamtsumme die Position des Ringes feststellen.

Es gibt nun verschiedene Möglichkeiten, die Lehre der vorliegenden Erfindung in vorteilhafter Weise auszugestalten und weiterzubilden. Dazu ist einerseits auf die den Patentansprüchen 1 und 2 nachgeordneten Ansprüche, andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung anhand der Zeichnung werden auch im allgemeinen bevorzugte Ausgestaltungen und Weiterbildungen der Lehre erläutert. In der Zeichnung zeigt

Fig. 1     in schematischer Darstellung, teilweise, ein Ausführungsbeispiel eines erfindungsgemäßen Wegmeßsystems,

Fig. 2     in schematischer Darstellung, im Sinne eines Blockschaltbildes, die Spannungsabgriffe zum Abgriff der Spannungswerte zwischen einzelnen Spannungsabgriffen und einem Referenzpotential,

Fig. 3     das Wegmeßsystem aus Fig. 1 mit einem die Einzelspannungen summierenden Verstärker,

Fig. 4     das Wegmeßsystem aus Fig. 1 mit einem Anschluß an eine Brückenschaltung,

Fig. 5     das Wegemeßsystem aus Fig. 1 bei symmetrischer Beaufschlagung durch eine Wechselspannungsquelle,

Fig. 6     das Wegmeßsystem aus Fig. 1 mit Temperaturkompensation und

Fig. 7     in schematischer Darstellung, teilweise, ein alternatives Ausführungsbeispiel eines erfindungsgemäßen Wegmeßsystems, wobei hier keine Spulenabgriffe realisiert sind.

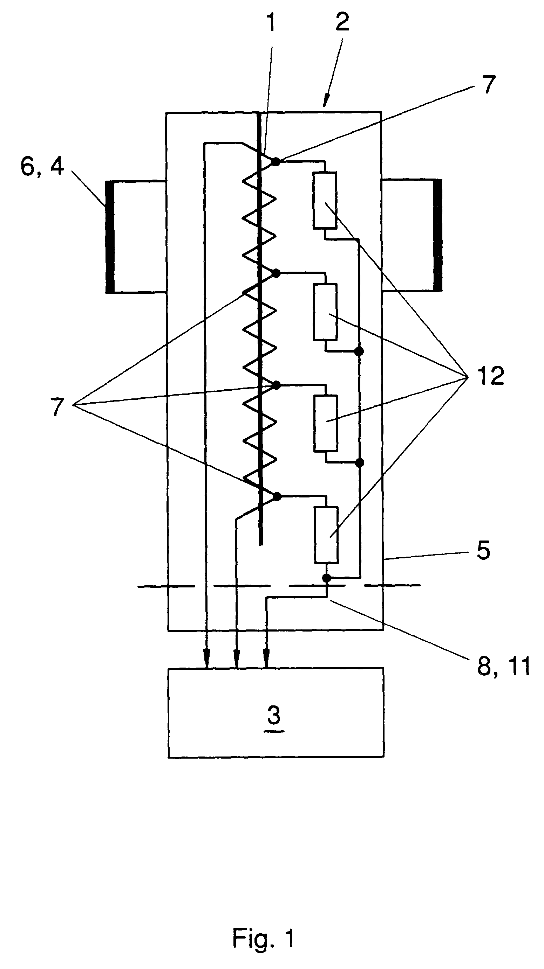

Fig. 1 zeigt ein Ausführungsbeispiel eines erfindungsgemäßen berührungslos arbeitenden Wegemeßsystems mit einem mit Wechselstrom beaufschlagbaren, eine Meßspule 1 aufweisenden Sensor 2, einer mit dem Sensor 2 verbundenen Versorgungs/Auswerteelektronik 3 und einem dem Sensor 2 zugeordneten, elektrisch und/oder magnetisch leitenden Meßobjekt 4, wobei die Meßspule 1 in einem zylindrischen Spulengehäuse 5 gekapselt ist und wobei das Meßobjekt 4 das Spulengehäuse 5 umgibt und in dessen Längsrichtung bewegbar ist.

Erfindungsgemäß ist das Meßobjekt 4 als das Spulengehäuse 5 mit Abstand umgreifender Ring 6 ausgeführt. Die Meßspule 1 weist im hier gewählten Ausführungsbeispiel mehrere Spannungsabgriffe 7 auf, so daß entsprechend der Anzahl der Spannungsabgriffe 7 der Reihe nach Spannungswerte jeweils zwischen den einzelnen Spannungsabgriffen 7 und einem Referenzpotential abgreifbar sind. Die Versorgungs-/Auswerteelektronik 3 weist ein elektronisches Bauteil zum Addieren der abgegriffenen Spannungswerte zu einer mit der Position des Meßobjekts 4 korrelierenden Gesamtspannung auf.

Fig. 2 zeigt im Sinne eines Blockschaltbildes einerseits den Abgriff von Einzelspannungen U1, U2, U3, U4, U5 zwischen den Spannungsabgriffen 7 sowie die Summation der Einzelspannungen U1 bis U5 zu aufsteigenden Spannungswerten Ua, Ub, Uc, Ud, Ue, so daß die Spannungswerte durch ein weiteres elektronisches Bauteil abermals zu einer Gesamtspannung addiert werden, die dann aufgrund der Häufigkeit der durch den Ring 6 verursachten Spannungsänderung zwischen zwei Spannungsabgriffen 7 in der Gesamtsumme bzw. Gesamtspannung einen entsprechenden Wert einnimmt. Dadurch läßt sich die Postion des Ringes 6 eindeutig bestimmen.

Fig. 3 zeigt besonders deutlich, daß den Spannungsabgriffen 7 ein Differenzverstärker 9 für die abgegriffenen Einzelspannungen nachgeschaltet ist. Der Ausgang des Differenzverstärkers 9 ist mit dem weiteren elektronischen Bauteil 10 zum abermaligen Addieren der Spannungswerte zu einer mit der Position des Meßobjekts 4 bzw. 6 korrelierenden Gesamtspannung verbunden. Das elektronische Bauteil 10 kann als summierender Verstärker mit vorzugsweise invertierendem Eingang ausgeführt sein.

Fig. 1 zeigt des weiteren, daß zwischen die einzelnen Spannungsabgriffe 7 und einem gemeinsamen Meßwertabgriff 11 Widerstände 12 geschaltet sind, die auf der dem jeweiligen Spannungsabgriff 7 abgewandten Seite zum Meßwertabgriff 11 hin miteinander gekoppelt sind. Diese Widerstände 12 weisen einen zumindest weitgehend identischen Nennwert auf, der um etwa zwei Ordnungen höher liegt als der Ausgangswiderstand der Meßspule 1 insgesamt.

In Fig. 1 ist des weiteren angedeutet, daß die Widerstände 12 gemeinsam mit der Meßspule 1 und den Spannungsabgriffen 7 innerhalb des Spulengehäuses 5 angeordnet sind. Den Figuren läßt sich des weiteren entnehmen, daß der Ring 6 eine Breite aufweist, die maximal dem Abstand zwischen zwei benachbarten Spannungsabgriffen 7 entspricht. Dadurch läßt sich die Lage des Ringes 6 zwischen den Spannungsabgriffen 7 eindeutig ermitteln.

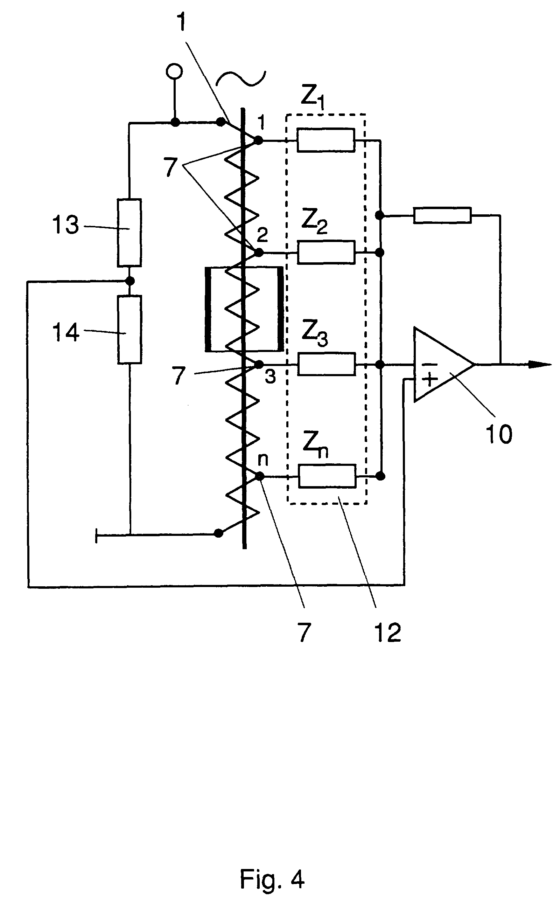

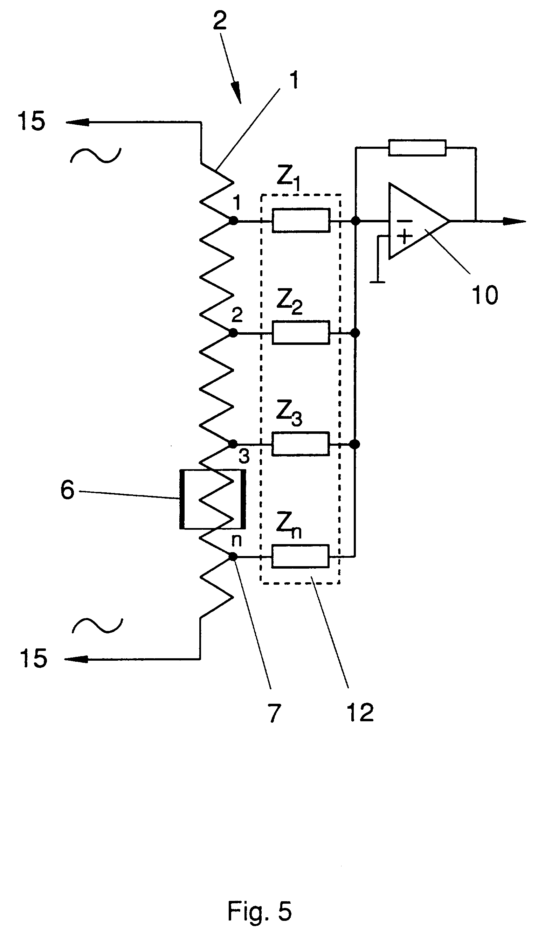

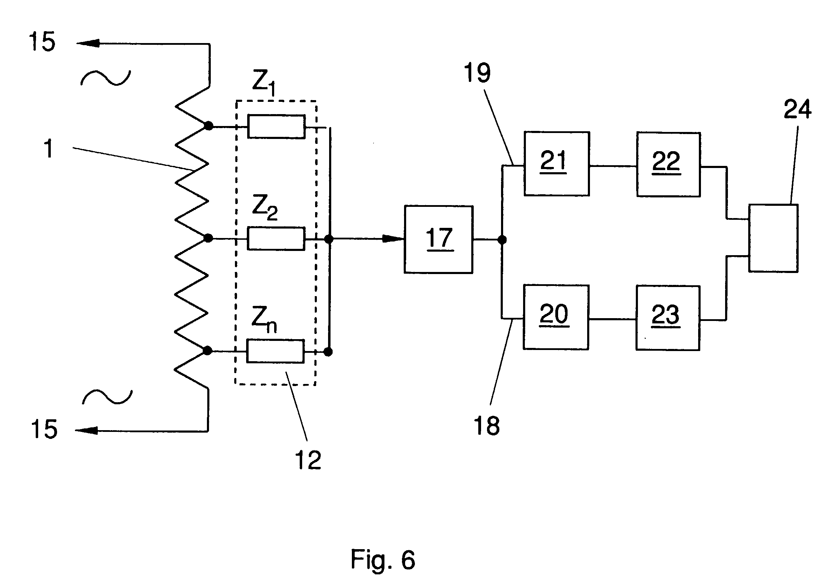

Gemäß der Darstellung in Fig. 4 ist das erfindungsgemäße Wegmeßsystem über zwei Widerstände 13, 14 an eine Brückenschaltung angeschlossen. Gemäß der Darstellung in Fig. 5 wird die Meßspule 1 von einer Wechselspannungsquelle 15 her symmetrisch gespeist. In Fig. 6 ist zusätzlich eine Gleichspannungsquelle 16 zur überlagernden Beaufschlagung der Meßspule 1 vorgesehen.

Nachfolgend wird einerseits auf die Funktionsweise, andererseits auf besondere Details des erfindungsgemäßen Wegmeßsystems Bezug genommen.

Für die Wechselstromspannung am Ausgang des Differenzverstärkers 9 oder summierenden Verstärkers gilt bei Fehlen des als Meßobjekt 4 dienenden Ringes 6 die folgende allgemeine Beziehung:

$$\dot{U}_{\Sigma\sim} = \frac{\dot{U}_\sim \cdot K \cdot [\sum_{i=1}^{n} i\, \dot{Z}_i + n \cdot \dot{Z}_0]}{\sum_{i=1}^{n} i\, \dot{Z}_i + 2\, \dot{Z}_0} \quad ,$$

wobei U~ die Speisespannung und K den Verstärkungsfaktor des summierenden Verstärkers 10 darstellen und wobei

$$\dot{Z}_1 = \dot{Z}_2 = ... \dot{Z}_n = Z; \quad K = \frac{Z_0}{Z}$$

für Z0 = der Gesamtwiderstand der Anfangssektionen der Meßspule und Z1, .... Zn = die Gesamtwiderstände der Bereiche der Meßspule zwischen den Meßabgriffen (Z1 = Z2 = ... Zn).

Aus der voranstehenden Beziehung folgt, daß aufgrund eines Überlagerns des Ringes 6 einzelner Spulenabschnitte die Widerstandsgröße Zl, Z2, ... Zn verändert werden, so daß die Ausgangsspannung bzw. aufaddierte Gesamtspannung proportional zur Position bzw. Koordinate des Ringes 6 ist.

Folglich ist die Linearität der Ausgangswerte bzw. Gesamtspannung im Hinblick auf die Position des Ringes 6 stets gewährleistet, zumal der Gesamtwiderstand der Meßspule 1 bei beliebigen Positionen des Ringes 6 bei gleichem Betrag des durch die Meßspule 1 fließenden Stromes identisch bleibt. Die Breite des Ringes 6 kann bspw. um etwa 10 % kürzer gewählt werden als der Abstand zwischen zwei Spannungsabgriffen 7, so daß bei einer Verschiebung des Ringes 6 der Gesamtwiderstand der Meßspule 1 unter Berücksichtigung der durch die Widerstände Z1, ... bis Zn fließenden Ströme unveränderlich bleibt.

Gemäß der Darstellung in Fig. 4 ist die Meßspule 1 an eine Brückenschaltung mittels zusätzlicher Widerstände 13, 14 geschaltet. Sofern die Widerstände 13, 14 den gleichen Nennwert aufweisen und der Ring 6 in der Mitte der Meßspule 1 angeordnet ist, wird die am Ausgang der Brücke auftretende Spannung zu Null abgeglichen sein. Eine Verschiebung des Ringes 6 in eine der beiden Richtungen führt dann zu einer Störung des Brückenabgleichs, so daß ein Ausgangssignal bzw. eine Ausgangsspannung vorliegt, wobei sich die Signalphase verändert.

Fig. 5 zeigt in schematischer Weise die Beaufschlagung der Meßspule 1 über die Wechselspannungsquelle 15. Hier ist die am Ausgang des Wegmeßsystems anliegende Spannung bei einer Position des Ringes 6 in der Mitte der Meßspule 1 ebenfalls Null.

Gemäß der Darstellung in Fig. 6 ist eine Temperaturkompensation bei auftretendem Temperaturgradienten entlang der Meßspule 1 vorgesehen. Dazu wird die Meßspule 1 gleichzeitig von der Wechselspannungsquelle 15 und einer Gleichspannungsquelle 16 beaufschlagt. Ein summierender Verstärker 17 summiert dabei die Wechsel- und Gleichspannungskomponenten, die von den Abgriffen der Meßspule 1 abgreifbar sind. Das so entstehende Ausgangssignal des Verstärkers 17 wird auf zwei Kanäle 18, 19 verteilt. Im Wechselstromkanal 18 erfolgt mit Hilfe eines weiteren Verstärkers 20 die Verstärkung der Wechselstromkomponente des Signals. Im Gleichstromkanal 19 wird das Ausgangssignal des Verstärkers 17 anhand eines Niederfrequenzfilters 21 und eines Gleichstromverstärkers 22 verstärkt.

Das Ausgangssignal des Verstärkers 20 wird mit Hilfe eines Demodulators 23 demoduliert und gefiltert und schließlich dem invertierenden Eingang eines Differentialverstärkers 24 zugeführt. Dem nicht invertierenden Eingang des Differentialverstärkers 24 wird entsprechend das Signal des Gleichstromverstärkers 22 zugeführt.

Bei Abwesenheit eines Temperaturgradienten ist das am Ausgang des Gleichstromverstärkers 22 anliegende Signal gleich Null und eine Abhängigkeit von der Position des Ringes 6 ist nicht gegeben. In diesem Falle bleibt der Ausgangswert der Meßspule 1 unverändert.

Beim Auftreten eines Temperaturgradienten entlang der Meßspule 1 entsteht am Ausgang des Gleichstromverstärkers 22 eine Spannung, die proportional zum Temperaturgradienten ist. Diese Spannung wird aus dem Ausgangssignal des Demodulators 23 mit Hilfe des Differentialverstärkers 24 subtrahiert, wodurch der Einfluß des Temperaturgradienten kompensiert wird. Der notwendige Koeffizient zur Temperaturkompensation im Gleichstromkanal wird durch die Wahl des Verstärkungsfaktors des Gleichstromverstärkers 22 bei einer voranzuschaltenden Eichung des Wegmeßsystems vorgegeben.

Das Spulengehäuse 5 sollte einen möglichst hohen spezifischen Widerstand bei hoher Temperaturleitfähigkeit aufweisen. Die Dicke der Gehäusewand sollte wesentlich geringer als die Eindringtiefe der Wirbelströme sein.

Der als Meßobjekt dienende Ring 6 muß ein Werkstoff mit niedrigem spezifischem Widerstand sein, um eine möglichst hohe Empfindlichkeit zu erzielen. Die unmittelbar im Spulengehäuse 5 angeordneten Widerstände 12 sollten hochstabilisiert sein und im Bereich zwischen 10 und 20 k$\Omega$ liegen. Bei einem Anschluß des Wegmeßsystems an die zuvor erwähnte Brückenschaltung sollten die Widerstände 13, 14 einen Nennwert von etwa 1 k$\Omega$ aufweisen.

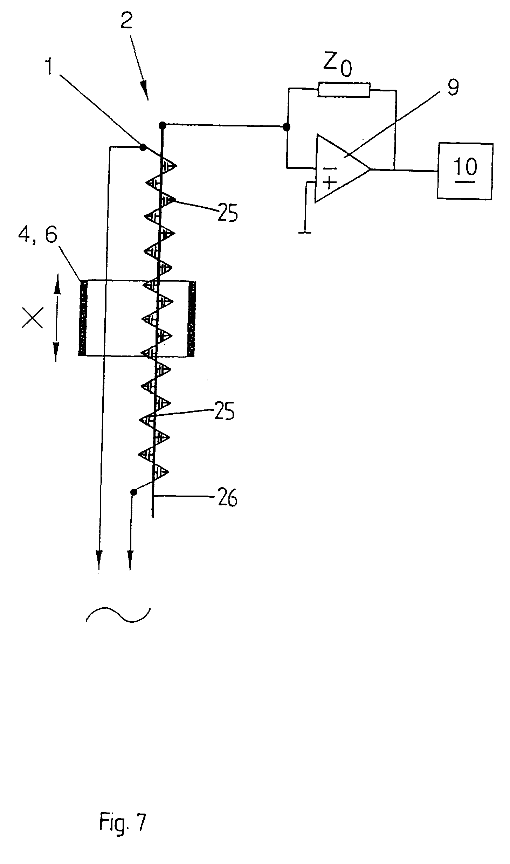

Fig. 7 zeigt eine vereinfachte Sensorausführung ohne direkte Abgriffe der Meßspule 1. Im Unterschied zu den voranstehend erörterten Ausführungsbeispielen erfindungsgemäßer Wegmeßsysteme sind hier die Widerstände durch den sogenannten Kapazitätsbelag 25 der Meßspule 1 gegen den Spulenkern 26 ersetzt. Folglich sind hier keine Spulenabgriffe mehr erforderlich. Der Spulenkern 26 besteht aus elektrisch leitfähigem Material und ist mit dem Minus-Eingang des Differenzverstärkers 9 verbunden. Die hier realisierte Anordnung hat den großen Vorteil, daß die Länge des Meßobjekts 4 bzw. Rings 6 quasi unendlich klein bemessen sein kann, da nämlich die direkt auf den Spulenkern 26 oder um ein darum angeordnetes, in der Figur nicht gezeigtes Rohr gewickelte Meßspule 1 mit ihren Windungsabschnitten beliebig viele Kapazitäten gegenüber dem Spulenkern 26 aufweist, dessen Potential am Differenzverstärker 9 anliegt. Folglich dient die in Fig. 7 dargestellte Variante eines erfindungsgemäßen Wegmeßsystems einer sehr exakten Messung mit kleinsten Meßobjekten 4 bzw. Ringen 6 oder gar Scheiben.

**Patentansprüche**

1. Berührungslos arbeitendes Wegmeßsystem mit einem mit Wechselstrom beaufschlagbaren, eine Meßspule (1) aufweisenden Sensor (2), einer mit dem Sensor (2) verbundenen Versorgungs-/Auswerteelektronik (3) und einem dem Sensor (2) zugeordneten, elektrisch und/oder magnetisch leitenden Meßobjekt (4), wobei die Meßspule (1) in einem vorzugsweise zylindrischen Spulengehäuse (5) gekapselt ist und wobei das Meßobjekt (4) das Spulengehäuse (5) zumindest teilweise umgibt und in dessen Längsrichtung bewegbar ist, **dadurch gekennzeichnet**, daß das Meßobjekt (4) als das Spulengehäuse (5) mit Abstand umgreifender Ring (6) ausgeführt ist, daß die Meßspule (1) mindestens zwei Spannungsabgriffe (7) aufweist, so daß entsprechend der Anzahl der Spannungsabgriffe (7) der Reihe nach Spannungswerte jeweils zwischen den einzelnen Spannungsabgriffen (7) und einem Referenzpotential (8) abgreifbar sind, und daß die Versorgungs-/Auswerteelektronik (3) ein elektronisches Bauteil (10) zum Addieren der abgegriffenen Spannungswerte zu einer mit der Position des Meßobjekts (4) korrelierenden Gesamtspannung umfaßt.

2. Berührungslos arbeitendes Wegmeßsystem mit einem mit Wechselstrom beaufschlagbaren, eine Meßspule (1) aufweisenden Sensor (2), einer mit dem Sensor (2) verbundenen Versorgungs-/Auswerteelektronik (3) und einem dem Sensor (2) zugeordneten, elektrisch und/oder magnetisch leitenden Meßobjekt (4), wobei die Meßspule (1) in einem vorzugsweise zylindrischen Spulengehäuse (5) gekapselt ist und wobei das Meßobjekt (4) das Spulengehäuse (5) zumindest teilweise umgibt und in dessen Längsrichtung bewegbar ist, **dadurch gekennzeichnet**, daß das Meßobjekt (4) als das Spulengehäuse (5) mit Abstand umgreifender Ring (6) ausgeführt ist, daß die Meßspule (1) mindestens zwei Spannungsabgriffe (7) aufweist, so daß entsprechend der Anzahl der Spannungsabgriffe (7) der Reihe nach Einzelspannungen zwischen den Spannungsabgriffen (7) abgreifbar sind und daß die Versorgungs/Auswerteelektronik (3) ein elektronisches Bauteil (10) zum Addieren der abgegriffenen Einzelspannungen zu aufsteigenden Spannungswerten sowie ein weiteres elektronisches Bauteil (10) zum abermaligen Addieren der Spannungswerte zu einer mit der Position des Meßobjekts (4) korrelierenden Gesamtspannung umfaßt.

3. Wegmeßsystem nach Anspruch 2, dadurch gekennzeichnet, daß den Spannungsabgriffen (7) ein Differenzverstärker (9) für die abgegriffenen Einzelspannungen nachgeschaltet ist und daß der Ausgang des Differenzverstärkers (9) mit dem weiteren elektronischen Bauteil (10) zum abermaligen Addieren der Spannungswerte zu einer mit der Position des Meßobjekts (4) korrelierenden Gesamtspannung verbunden ist.

4. Wegmeßsystem nach einem der Ansprüche 1 bis 3, dadurch gekennzeichnet, daß das elektronische Bauteil (10) zum Addieren der Spannungswerte als summierender Verstärker (17) mit vorzugsweise invertierendem Eingang ausgeführt ist.

5. Wegmeßsystem nach einem der Ansprüche 1 bis 4, dadurch gekennzeichnet, daß die Spannungsabgriffe (7) bzw. die zwischen den Spannungsabgriffen (7) liegenden Spulenabschnitte so gewählt sind, daß Einzelspannungen bei Abwesenheit des Ringes (6) zumindest weitgehend identisch sind.

6. Wegmeßsystem nach einem der Ansprüche 1 bis 4, dadurch gekennzeichnet, daß zwischen die einzelnen Spannungsabgriffe (7) und einem gemeinsamen Meßwertabgriff (11) Widerstände (12) geschaltet sind, die auf der dem jeweiligen Spannungsabgriff (7) abgewandten Seite zum Meßwertabgriff (11) hin miteinander gekoppelt sind, daß die Widerstände (12) einen zumindest weitgehend identischen Nennwert bzw. Widerstandswert aufweisen, der vorzugsweise um etwa zwei Ordnungen höher liegt als der Ausgangswiderstand der Meßspule (1) und daß ggf. die Widerstände (12) gemeinsam mit der Meßspule (1) und den Spannungsabgriffen (7) innerhalb des Spulengehäuses (5) angeordnet sind.

7. Wegmeßsystem nach einem der Ansprüche 1 bis 6, dadurch gekennzeichnet, daß der Ring (6) eine maximal dem Abstand zwischen zwei benachbarten Spannungsabgriffen (7) entsprechende Breite oder eine genau dem Abstand zwischen zwei benachbarten Spannungsabgriffen (7) entsprechende Breite aufweist, so daß der Gesamtausgangswiderstand der Meßspule (1) ungeachtet der Position des Ringes (6) unveränderbar ist.

8. Wegmeßsystem nach einem der Ansprüche 1 bis 7, dadurch gekennzeichnet, daß die Meßspule (1) über zwei Widerstände (13, 14) an eine Brückenschaltung angeschlossen ist, daß die Meßspule (1) ggf. von einer Wechselspannungsquelle (15) symmetrisch gespeist wird und daß die Meßspule (1) ggf. zusätzlich an eine Gleichspannungsquelle (16) angeschlossen ist.

9. Wegmeßsystem nach einem der Ansprüche 1 bis 8, dadurch gekennzeichnet, daß der Ring (6) eine in seinem Inneren angeordnete, mit einer Wechselspannung beaufschlagbare Kompensationsspule aufweist.

10. Wegmeßsystem nach einem der Ansprüche 1 bis 9, dadurch gekennzeichnet, daß der Sensor (2) induktiv oder nach dem Wirbelstromprinzip arbeitet und daß die Meßspule (1) ggf. einen ferromagnetischen Spulenkern aufweist.

11. Wegmeßsystem nach einem der Ansprüche 1 bis 10, dadurch gekennzeichnet, daß der Ring (6) aus einem Werkstoff mit geringem spezifischem elektrischem Widerstand, vorzugsweise aus Aluminium, hergestellt ist.

12. Verfahren zur berührungslosen Wegmessung durch ein Wegmeßsystem nach einem der Ansprüche 1 bis 11, **dadurch gekennzeichnet**, daß entsprechend der Anzahl der Spannungsabgriffe (7) der Reihe nach Spannungswerte jeweils zwischen den einzelnen Spannungsabgriffen (7) und einem Referenzpotential (8) abgegriffen und die abgegriffenen Spannungswerte zu einer mit der Position des Meßobjekts (4) korrelierenden Gesamtspannung addiert werden.

13. Verfahren zur berührungslosen Wegmessung durch ein Wegmeßsystem nach einem der Ansprüche 1 bis 11, **dadurch gekennzeichnet**, daß entsprechend der Anzahl der Spannungsabgriffe (7) der Reihe nach Einzelspannungen zwischen den Spannungsabgriffen (7) abgegriffen, die abgegriffenen Einzelspannungen zu aufsteigenden Spannungswerten addiert und abermals zu einer mit der Position des Meßobjekts (4) korrelierenden Gesamtspannung addiert werden.

**Claims**

1. Distance measuring system operating in a non-contact manner and comprising a sensor (2) that can be acted on by an alternating current and is provided with a measuring coil (1), an electronic supply/evaluation circuit (3) connected to the sensor, and an electrically and/or magnetically conductive test object (4) allocated to the sensor (2), the measuring coil (1) being packaged in a preferably cylindrical coil housing (5), and the test object (4) surrounding the coil housing (5) at least in part and being movable in its longitudinal direction, characterised in that the test object (4) is constructed as a ring (6) surrounding the coil housing (5) at a distance therefrom; in that the measuring coil (1) is provided with at least two voltage taps (7), such that according to the number of voltage taps (7) voltage values can be tapped one after the other, each between the individual voltage taps (7) and a reference potential (8) in each case, and that the electronic supply/evaluation circuit (3) comprises an electronic component (10) for adding the tapped voltage values to a total voltage correlating with the position of the test object (4).

2. Distance measuring system operating in a non-contact manner and comprising a sensor (2) that can be actuated by an alternating current and is provided with a measuring coil (1), an electronic supply/evaluation circuit (3), and an electrically and/or magnetically conductive test object (4) allocated to the sensor (2), the measuring coil (1) being packaged in a preferably cylindrical coil housing (5), and the test object (4) surrounding the coil housing (5) at least in part and being movable in its longitudinal direction, characterised in that the test object (4) is constructed as a ring (6) surrounding the coil housing (5) at a distance therefrom; in that the measuring coil (1) is provided with at least two voltage taps (7), such that, according to the number of voltage taps (7), individual voltages can be tapped, in series, between the voltage taps (7); and in that the electronic supply/evaluation circuit (3) comprises an electronic component (10) for adding the tapped individual voltages to increasing voltage values, as well as a further electronic component (10) for adding repeatedly the voltage values to a total voltage correlating with the position of the test object (4).

3. Distance measuring system according to Claim 2, characterised in that the voltage taps (7) are followed by a differential amplifier (9) for the tapped individual voltages; and in that the output of the differential amplifier (9) is connected to the further electronic component (10) for adding repeatedly the voltage values to a total voltage correlating with the position of the test object (4).

4. Distance measuring system according to one of Claims 1 to 3, characterised in that the electronic component (10) for adding the voltage values is designed and constructed as a summation amplifier (17), preferably with an inverting input.

5. Distance measuring system according to one of Claims 1 to 4, characterised in that the voltage taps (7) or the coil sections extending between the voltage taps (7) are selected such that individual voltages are at least largely identical in the absence of the ring (6).

6. Distance measuring system according to one of Claims 1 to 4, characterised in that resistors (12) are interposed between the individual voltage taps (7) and a common measuring tap (11), which resistors are coupled to one another on the side facing away from the respective voltage tap (7) in a direction towards the measuring tap (11); in that the resistors (12) have an at least substantially identical nominal value or resistance value, which is preferably one or two orders higher than the output resistance of the measuring coil (1); and in that, optionally, the resistors (12) are, together with the measuring coil (1) and the measuring taps (7), disposed inside the coil casing (5).

7. Distance measuring system according to one of Claims 1 to 6, characterised in that the ring (6) has a width which, at most, corresponds to the distance between two adjacent voltage taps (7) or a width which corresponds exactly to the distance between two adjacent voltage taps (7), such that the entire output resistance of the measuring coil (1) is unalterable irrespective of the position of the ring (6).

8. Distance measuring system according to any one of Claims 1 to 7, characterised in that the measuring coil (1) is connected via two resistors (13, 14) to a bridge circuit; in that the measuring coil (1) is optionally supplied by an alternating voltage source (15) in a symmetrical manner; and in that the measuring coil (1) is optionally additionally connected to a dc voltage source (16).

9. Distance measuring system according to one of Claims 1 to 8, characterised in that the ring (6) comprises, disposed in the inside thereof, a compensation coil which can be acted upon by an alternating voltage.

10. Distance measuring system according to any one of Claims 1 to 9, characterised in that the sensor (2) operates inductively or according to the eddy principle; and in that the measuring coil (1) comprises a ferromagnetic coil core.

11. Distance measuring system according to one of Claims 1 to 10, characterised in that the ring (6) is made of a material with a low specific electrical resistance, preferably of aluminium.

12. Process for distance measuring without contact using a distance measuring system according to one of Claims 1 to 11, characterised in that, corresponding to the number of voltage taps (7), the voltage values are tapped in series between the individual voltage taps (7) and a reference potential (8) in each case, and the tapped voltage values are added to a total voltage which corresponds to the position of the test object (4).

13. Process for distance measuring without contact using a distance measuring system according to one of Claims 1 to 11, characterised in that, corresponding to the number of voltage taps (7), individual voltages are tapped in series between the voltage taps (7), the tapped individual voltages are added to increasing voltage values and added once more to a total voltage which correlates to the position of the test object (4).

**Revendications**

1. Système de mesure de déplacement fonctionnant sans contact avec un capteur (2) présentant un enroulement de mesure (1) et soumis à un courant alternatif, avec une unité électronique d'alimentation et d'analyse (3) reliée au capteur (2) et avec un objet à mesurer (4) à conductivité électrique et/ou magnétique associée au capteur (2), l'enroulement de mesure (1) étant logé dans un carter de préférence cylindrique (5) de blindage de l'enroulement, l'objet à mesurer (4) entourant au moins partiellement le carter (5) et pouvant être déplacé dans la direction longitudinale de ce carter,
caractérisé par le fait que l'objet à mesurer (4) a la forme d'un anneau (6) entourant à distance le carter (5), par le fait que l'enroulement de mesure (1) présente au moins deux bornes de prélèvement de tension (7), de telle sorte que selon le nombre de bornes de prélèvement de tension (7) peuvent être prélevées successivement des différences de potentiel chaque fois entre les différentes bornes (7) et un potentiel de référence (8), et par le fait que l'unité électronique d'alimentation et d'analyse (3) comprend un composant électronique (10) permettant l'addition des potentiels prélevés à une tension globale en corrélation avec la position de l'objet à mesurer (4).

2. Système de mesure de déplacement fonctionnant sans contact avec un capteur (2) présentant un enroulement de mesure (1) et soumis à un courant alternatif, avec une unité électronique d'alimentation et d'analyse (3) reliée au capteur (2) et avec un objet à mesurer (4) à conductivité électrique et/ou magnétique associée au capteur (2), l'enroulement de mesure (1) étant logé dans un carter de préférence cylindrique (5) de blindage de l'enroulement, l'objet à mesurer (4) entourant au moins partiellement le carter (5) et pouvant être déplacé dans la direction longitudinale de ce carter,
caractérisé par le fait que l'objet à mesurer (4) a la forme d'un anneau (6) entourant à distance le carter (5), par le fait que l'enroulement de mesure (1) présente au moins deux bornes de prélèvement de tension (7), de telle sorte que selon le nombre de bornes de prélèvement de tension (7) peuvent être prélevées successivement des différences de potentiel chaque fois entre les différentes bornes (7), et par le fait que l'unité électronique d'alimentation et d'analyse (3) comprend un composant électronique (10) permettant la sommation des tensions individuelles prélevées en des valeurs de potentiel croissantes ainsi qu'un autre composant électronique (10) pour une nouvelle addition des valeurs de potentiel à une tension globale en corrélation avec la position de l'objet à mesurer (4).

3. Système de mesure de déplacement suivant la revendication 2, caractérisé par le fait que derrière les bornes de prélèvement de tension (7) est mis en circuit un amplificateur différentiel (9) pour les tensions individuelles prélevées et par le fait que la sortie de l'amplificateur différentiel (9) est connectée à un autre composant électronique (10) pour une nouvelle sommation des valeurs de tension en une tension globale en corrélation avec la position de l'objet à mesurer (4).

4. Système de mesure de déplacement suivant l'une quelconque des revendications de 1 à 3, caractérisé par le fait que le composant électronique (10) pour l'addition des valeurs de tension a la forme d'un amplificateur de sommation (17) avec une entrée de préférence d'inversion.

5. Système de mesure de déplacement suivant l'une quelconque des revendications de 1 à 4, caractérisé par le fait que les bornes de prélèvement de tension (7) ou les tronçons d'enroulement situés entre les bornes (7) sont choisis de manière telle qu'en cas d'absence de l'anneau (6) les tensions individuelles sont au moins sensiblement identiques.

6. Système de mesure de déplacement suivant l'une quelconque des revendications de 1 à 4, caractérisé par le fait que des résistances (12) sont mises en circuit entre les bornes individuelles de prélèvement de tension (7) et une borne de prélèvement commune de valeur de mesure (11), résistances (12) qui du côté opposé à la borne de prélèvement individuelle (7) sont connectées conjointement à la borne de prélèvement commune de valeur de mesure (11), par le fait que les résistances (12) présentent une valeur nominale ou de résistance sensiblement identique, laquelle est supérieure de deux ordres de grandeur à la valeur de résistance de l'enroulement de mesure (1) et par le fait que le cas échéant les résistances (12) sont, conjointement avec l'enroulement de mesure (1) et les bornes de prélèvement de tension (7), disposées à l'intérieur du carter (5) de l'enroulement.

7. Système de mesure de déplacement suivant l'une quelconque des revendications de 1 à 6, caractérisé par le fait que l'anneau (6) présente une largeur qui correspond au maximum à la distance entre deux bornes de prélèvement de tension (7) voisines ou qui correspond exactement à la distance entre deux bornes de prélèvement de tension (7) voisines, de sorte que la résistance de sortie globale de l'enroulement de mesure (1) est invariable quelle que soit la position de l'anneau (6).

8. Système de mesure de déplacement suivant l'une quelconque des revendications de 1 à 7, caractérisé par le fait que l'enroulement de mesure (1) est par l'intermédiaire de deux résistances (13, 14) connecté à un montage en pont, par le fait que l'enroulement de mesure est le cas échéant par une source de tension alternative (15) alimenté symétriquement et par le fait que l'enroulement de mesure (1) est, le cas échéant en addition, connecté à une source de tension continue (16).

9. Système de mesure de déplacement suivant l'une quelconque des revendications de 1 à 8, caractérisé par le fait que l'anneau (6) présente un enroulement de compensation disposé à l'intérieur de cet anneau et pouvant être soumis à une tension alternative.

10. Système de mesure de déplacement suivant l'une quelconque des revendications de 1 à 9, caractérisé par le fait que le capteur (2) fonctionne par induction ou selon le principe des courants de Foucault et par le fait que l'enroulement de mesure (1) présente le cas échéant un noyau ferromagnétique de bobine.

11. Système de mesure de déplacement suivant l'une quelconque des revendications de 1 à 10, caractérisé par le fait que l'anneau (6) est fabriqué en un matériau à résistance électrique spécifique faible, de préférence en aluminium.

12. Procédé de mesure de déplacement sans contact au moyen d'un système de mesure suivant l'une quelconque des revendications de 1 à 11,
caractérisé par le fait que conformément au nombre de bornes de prélèvement de tension (7) sont successivement prélevées des différences de potentiel chaque fois entre les différentes bornes (7) et un potentiel de référence (8) et par le fait que les différences de potentiel prélevées sont additionnées pour obtenir une tension globale en corrélation avec la position de l'objet à mesurer (4).

13. Procédé de mesure de déplacement sans contact au moyen d'un système de mesure suivant l'une quelconque des revendications de 1 à 11,
caractérisé par le fait que conformément au nombre de bornes de prélèvement de tension (7) sont successivement prélevées des différences de potentiel entre les bornes (7), par le fait que les différences de potentiel individuelles prélevées sont additionnées pour obtenir des valeurs de tension croissantes et sont additionnées une nouvelle fois pour obtenir une tension globale qui est en corrélation avec la position de l'objet à mesurer (4).

Fig. 1

Fig. 2

Fig. 3

Fig. 4

Fig. 5

Fig. 6

Fig. 7